# EUROPÄISCHE PATENTSCHRIFT

(11) **EP 2 783 439 B1**
(45) Veröffentlichungstag und Bekanntmachung des Hinweises auf die Patenterteilung: **25.10.2017**
(21) Anmeldenummer: 12787368.5
(22) Anmeldetag: 30.10.2012
(51) Int. Cl.: H02G 5/04

(54) **HALTESYSTEM MIT HALTEVORRICHTUNG ZUR AUFNAHME VON LEITERN, ANLAGE**
SUPPORT SYSTEM WITH SUPPORT FOR CONDUCTORS AND EQUIPMENT
SYSTÈME SUPPORT AVEC DISPOSITIF SUPPORT DE CONDUCTEURS, ET ÉQUIPEMENT

(30) Priorität: 25.11.2011 DE 102011119375
(43) Veröffentlichungstag der Anmeldung: 01.10.2014
(73) Patentinhaber: Sew-Eurodrive GmbH & Co. KG, 76646 Bruchsal (DE)
(72) Erfinder: JOCHEM, Sascha, 67360 Lingenfeld (DE); BERGER, Ralf, 76297 Stutensee (DE)
(74) Vertreter: Tüngler, Eberhard
(86) Internationale Anmeldenummer: PCT/EP2012/004538
(87) Internationale Veröffentlichungsnummer: WO 2013/075784

(56) Entgegenhaltungen:
- EP-A1- 0 139 915
- DE-A1- 3 702 010
- DE-A1- 4 013 998
- DE-A1- 10 121 584
- DE-B1- 2 453 754
- US-A- 3 772 482

## Beschreibung

Die Erfindung betrifft ein Haltesystem aufweisend eine Haltevorrichtung zur Aufnahme von Leitern, und eine Anlage.
Aus der US6073739A sind Schienensegmente bekannt mit Haltevorrichtungen zur Aufnahme von Leitern mit kreisförmigem Querschnitt.

Aus der DE 24 53 754 B1 ist eine Schleifleitungsanordnung bekannt.
Aus der US 3 772 482 A ist eine Schleifleitungsanordnung mit starrer Schiene bekannt.
Aus der DE 101 21 584 A1 ist eine Stromschiene und ein Adapter für elektrische Verbraucher, insbesondere für Leuchten, bekannt.
Aus der DE 37 02 010 A1 ist ein Halter für Stromschienen bekannt.
Aus der EP 0 139 915 A1 ist eine Tragschienenanordnung für Hängebahnen bekannt.
Aus der DE 40 13 998 A1 ist eine Stromschiene in einem Kabelkanal bekannt.
Der Erfindung liegt daher die Aufgabe zugrunde, die Installation von Leitern in einer Anlage zu vereinfachen.
Erfindungsgemäß wird die Aufgabe bei dem Haltesystem mit Haltevorrichtung zur Aufnahme von Leitern nach den in Anspruch 1 und bei der Anlage nach den in Anspruch 13 angegebenen Merkmalen gelöst.

Wichtige Merkmale der Erfindung bei dem Haltesystem aufweisend zumindest ein erstes Schienenteil und ein zweites Schienenteil und zumindest eine Haltevorrichtung sind, dass
wahlweise das erste oder das zweite Schienenteil im selben Haltebereich der Haltevorrichtung formschlüssig verbindbar ist,
wobei das erste Schienenteil zumindest vom zweiten Vorsprung formschlüssig gehalten wird, insbesondere wobei der zweite Vorsprung eingeklipst ist am Endbereich des ersten Schienenteils,
wobei das zweite Schienenteil zumindest vom ersten Vorsprung formschlüssig gehalten wird, insbesondere wobei der erste Vorsprung eingeklipst ist in eine Nut des zweiten Schienenteils, insbesondere in eine in Schienenrichtung sich erstreckende Nut des zweiten Schienenteils.

Von Vorteil ist dabei, dass verschiedenartige Schienenteile in die eine Haltevorrichtung einklipsbar sind. Somit ist die zu bevorratende Varianz an Haltevorrichtungen reduziert, wodurch Kosten für Lagerhaltung reduzierbar sind.

Erfindungsgemäß sind bei der Haltevorrichtung zur Aufnahme von Leitern wichtige Merkmale, dass die Haltevorrichtung zumindest einen Haltebereich aufweist mit zumindest einem Schenkelabschnitt und einem Wandabschnitt,
wobei der Schenkelabschnitt mindestens einen ersten Vorsprung und einen zweiten Vorsprung aufweist,
wobei der zweite Vorsprung an einem Endbereich des Schenkelabschnitts angeordnet ist,
und wobei der erste Vorsprung zwischen dem zweiten Vorsprung und dem Wandabschnitt angeordnet ist.

Von Vorteil ist dabei, dass verschieden geformte Leiter mit variierenden Größen und Durchmessern in die Haltevorrichtung einklipsbar sind. Leiter mit großer Seitenlänge sind mittels des zweiten Vorsprungs befestigbar, Leiter mit kleiner Seitenlänge sind mittels des erstens Vorsprungs befestigbar.

Damit ist also eine Verringerung der Varianz der Haltevorrichtungen ermöglicht, so dass auch bei Verwendung vieler unterschiedlicher Leiter in einer Anlage nur diese eine Art von Haltevorrichtung bevorratet werden muss. Somit lässt sich Lagerfläche und Material einsparen und der Umweltschutz ist verbessert.

Des Weiteren ermöglicht die Haltevorrichtung die gleichzeitige Verwendung von verschieden geformten Leitern in einer Haltevorrichtung, so dass keine Spezialanfertigungen benötigt werden.

Bei der Verwendung beider Vorsprünge zur Befestigung eines Leiters wird dieser besonders sicher gehalten, da - auch wenn ein Vorsprung defekt ist - der andere Vorsprung den Leiter weiterhin hält.

Erfindungsgemäß weist der Haltebereich zwei Schenkelabschnitte auf, insbesondere wobei die Vorsprünge auf den Innenseiten eines jeden Schenkelabschnittes angeordnet sind. Von Vorteil ist dabei, dass der Leiter von zwei Seiten mittels der Vorsprünge auf den Innenseiten der Schenkelabschnitte gehalten wird. Insbesondere drückt der eine Schenkelabschnitt den Leiter gegen den anderen Schenkelabschnitt.

Erfindungsgemäß ist der Schenkelabschnitt elastisch auslenkbar. Von Vorteil ist dabei, dass der Leiter einklipsbar ist und somit einfach zu befestigen, ohne dass ein Werkzeug benötigt wird.

Bei einer vorteilhaften Ausgestaltung erstrecken sich die Vorsprünge in Schienenrichtung. Von Vorteil ist dabei, dass der Leiter über die gesamte Länge des Haltebereichs gehalten wird, somit ist die Haltevorrichtung besonders sicher.

Bei einer vorteilhaften Ausgestaltung ist der erste und/oder der zweite Vorsprung aus in Schienenrichtung jeweils voneinander beabstandeten Einzelvorsprüngen gebildet, deren Verbindungslinie, insbesondere im Wesentlichen, in Schienenrichtung liegt. Von Vorteil ist dabei, dass in materialsparender Weise eine gute Haltefunktion erreichbar ist. Denn die in den Aufnahmebereich hinein ragenden Vorsprünge sind in Schienenrichtung sozusagen mehrstückig ausführbar, wodurch weniger Material an in den Aufnahmebereich hineinragenden Materialbereichen notwendig ist.

Bei einer vorteilhaften Ausgestaltung beträgt der Abstand zwischen dem ersten Vorsprung und dem Wandabschnitt 30% bis 70% der Länge des Schenkelabschnitts in Einführrichtung, insbesondere wobei der Abstand zwischen dem ersten Vorsprung und dem zweiten Vorsprung 30% bis 70% der Länge des Schenkelabschnitts in Einführrichtung beträgt. Von Vorteil ist dabei, dass die Haltekraft auf die gesamte Länge des Schenkelabschnitts verteilt wird, somit ist die Gefahr des Ausbrechens des Schenkelabschnitts reduziert und die Sicherheit erhöht.

Bei einer vorteilhaften Ausgestaltung ist die Wandstärke des Schenkelabschnittes zwischen den Vorsprüngen nicht konstant, insbesondere weist die Wandstärke eine Verengung auf. Von Vorteil ist dabei, der Schenkelabschnitt nicht nur gegen den Wandabschnitt des Haltebereichs auslenkbar ist, sondern auch in sich elastisch verformbar ist und ein Ausbrechen erschwert ist.

Bei einer vorteilhaften Ausgestaltung ist in Schienenrichtung vor dem Schenkelabschnitt eine Zunge angeordnet, insbesondere eine von dem Schenkelabschnitt in Schienenrichtung beabstandete Zunge, insbesondere wobei die Zunge in Schienenrichtung weiter ausgedehnt ausgeführt ist als in Querrichtung oder Einführrichtung, insbesondere wobei die Zunge mit einem Wandteil verbunden und insbesondere einstückig ausgeformt ist, wobei das Wandteil mit dem Wandabschnitt verbunden und insbesondere einstückig ausgeformt ist, insbesondere wobei das Wandteil aus den Wandabschnitten zusammengesetzt ist. Von Vorteil ist dabei, dass Leiter, die in den Haltebereich eingeklipst werden, auf die Zunge auflegbar sind und diese den Haltebereich verlängert und entlastet. Mittels dieser Geometrie ist insbesondere der Abstand zwischen zwei Schienenteilen reduzierbar, da der Abstand zwischen zwei Haltebereichen in Querrichtung geringer wählbar ist als die Breite eines Haltebereichs in Querrichtung. Dabei sind die Schenkelabschnitte elastisch auslenkbar und stören sich nicht gegenseitig. Somit baut die Haltevorrichtung besonders kompakt, so dass Material einsparbar ist.

Bei einer vorteilhaften Ausgestaltung weist die Haltevorrichtung zumindest zwei Zungen auf, insbesondere wobei am Endbereich jeder Zunge eine Auskragung ausgeformt ist, insbesondere wobei die Auskragung jeweils auf der der jeweils anderen Zunge abgewandten Seite der Zunge angeordnet ist. Von Vorteil ist dabei, dass der Auflagebereich der Zungen mittels der Auskragungen vergrößert ist, so dass ein Abrutschen der Leiter verhinderbar ist.

Bei einer vorteilhaften Ausgestaltung ist die Zunge elastisch auslenkbar ausgeführt. Von Vorteil ist dabei, dass Leiter mit großer Höhe oder mit kreisförmigem Querschnitt zwischen die Zungen klemmbar ist. Somit ist die Variantenvielfalt der verwendbaren Kabel erhöht.

Bei einer vorteilhaften Ausgestaltung ist die Haltevorrichtung einstückig ausgeführt, insbesondere wobei die Haltevorrichtung als Kunststoff-Spritzgussteil ausgeführt ist. Von Vorteil ist dabei, dass die Haltevorrichtung in einfacher Art und Weise und preisgünstig herzustellen ist.

Bei einer vorteilhaften Ausgestaltung wird das zweite Schienenteil vom ersten Vorsprung formschlüssig gehalten, insbesondere wobei der erste Vorsprung eingeklipst ist in eine Nut des zweiten Schienenteils, insbesondere in eine in Schienenrichtung sich erstreckende Nut des zweiten Schienenteils, und das zweite Schienenteil ebenfalls vom zweiten Vorsprung formschlüssig gehalten wird, insbesondere wobei der zweite Vorsprung eingeklipst ist am Endbereich des zweiten Schienenteils. Von Vorteil ist dabei, dass ein redundant ausgeführter Haltemechanismus besonders sicher ist, da falls ein Haltemechanismus versagt, der andere das Schienenteil weiterhin sicher hält.

Bei einer vorteilhaften Ausgestaltung weist ein Schenkelabschnitt des ersten Schienenteils im Wesentlichen ebene Außenflächen auf, wobei in einer Außenfläche eines Schenkelabschnittes des zweiten Schienenteils eine Vertiefung ausgeführt ist. Von Vorteil ist dabei, dass verschiedene Varianten von Schienenteilen verwendbar sind.

Bei einer vorteilhaften Ausgestaltung weist das zweite Schienenteil ein Isolierprofilteil und eine Stromleitschiene auf, insbesondere wobei die Stromleitschiene vom Isolierprofilteil zumindest teilweise umgeben ist, insbesondere wobei die Vertiefung sowohl im Isolierprofilteil als auch in der Stromleitschiene ausgeformt ist, insbesondere wobei der Abstand zwischen der Vertiefung und einem freien Ende des Schenkelabschnitts zwischen 30% und 70% der Länge des Schenkelabschnitts beträgt, insbesondere wobei die Vertiefung als Nut oder Kerbe ausgeführt ist. Von Vorteil ist dabei, dass das Isolierprofilteil die Stromleitschiene zur Haltevorrichtung hin isoliert. Die Vertiefung im Schenkelabschnitt ist dabei in einfacher Art und Weise herstellbar.

Bei einer vorteilhaften Ausgestaltung ist der erste Vorsprung der Haltevorrichtung formschlüssig verbindbar mit der Vertiefung im zweiten Schienenteil, insbesondere ist der Vorsprung in die Vertiefung einklipsbar. Von Vorteil ist dabei, dass das Schienenteil in einfacher Art und Weise sicher mit der Haltevorrichtung verbindbar ist.

Bei einer vorteilhaften Ausgestaltung ein Endbereich des ersten und/oder zweiten Schienenteils formschlüssig verbindbar ist mit dem zweiten Vorsprung an der Haltevorrichtung, insbesondere ist das Schienenteil in die Haltevorrichtung einklipsbar. Von Vorteil ist dabei, dass das Schienenteil in einfacher Art und Weise sicher mit der Haltevorrichtung verbindbar ist. Dabei ist keine Vertiefung im Schienenteil erforderlich, wodurch die Herstellung des Schienenteiles vereinfacht ist.

Bei einer vorteilhaften Ausgestaltung ist der Schenkelabschnitt der Haltevorrichtung mittels des ersten Schienenteils elastisch verformt, insbesondere ist ein den Vorsprung aufweisenden mittlerer Abschnitt des Schenkelabschnitts elastisch verformt. Von Vorteil ist dabei, dass Schienenteile in die Haltevorrichtung einklipsbar sind, deren Geometrie der Haltevorrichtung nur ansatzweise entspricht. Somit ist die Haltevorrichtung vielfältig einsetzbar.

Bei einer vorteilhaften Ausgestaltung ist die Zunge mittels des zweiten Schienenteils elastisch verformt, insbesondere ist die Zunge so stark verformt, dass die Auskragung das Wandteil berührt. Von Vorteil ist dabei, dass die Zunge als eine Art Feder wirkt und das Schienenteil gegen einen der Vorsprünge drückt, wodurch die Verbindung des Schienenteils mit der Haltevorrichtung besonders sicher ist. Insbesondere ist ein Ausbrechen der Zunge oder der Schenkelabschnitte des Haltebereichs verhinderbar.

Bei einer vorteilhaften Ausgestaltung ist die Stromleitschiene mittels eines Schleifkontaktes eines Schienenfahrzeuges kontaktierbar. Von Vorteil ist dabei, dass eine große Vielfalt von Anwendungen des Haltesystems ermöglicht ist.

Wichtige Merkmale der Erfindung bei der Anlage für ein Schienenfahrzeug, aufweisend einen Schienenträger und ein Haltesystem, sind, dass das Haltesystem mit dem Schienenträger formschlüssig verbindbar ist, insbesondere in den Schienenträger einklipsbar ist.

Von Vorteil ist dabei, dass die Anlage in einfacher Art und Weise modular aufbaubar ist. Die Haltesysteme sind bei Bedarf in einfacher Art und Weise austauschbar, so dass eine hohe Verfügbarkeit der Anlage realisierbar ist.
Bei einer vorteilhaften Ausgestaltung ist das Schienenfahrzeug mittels eines Schleifkontaktes zu der Stromleitschiene elektrisch versorgbar. Von Vorteil ist dabei, dass keine Energiespeichersysteme auf dem Fahrzeug benötigt werden. Dadurch ist das Gewicht des Fahrzeuges reduzierbar, wodurch der Energiebedarf reduzierbar ist. Somit wird die Umwelt geschont.

Bei einer vorteilhaften Ausgestaltung weist der Schienenträger Abrollflächen zum Abrollen der Räder des Schienenfahrzeugs auf. Von Vorteil ist dabei, dass der Schienenträger multifunktional ist, somit ist die Zahl der Komponenten der Anlage reduzierbar.
Bei einer vorteilhaften Ausgestaltung sind mindestens zwei Haltevorrichtungen mit dem Schienenträger formschlüssig verbindbar, insbesondere wobei die Haltevorrichtungen in Schienenrichtung voneinander beabstandet sind. Von Vorteil ist dabei, dass die Länge der Haltevorrichtungen an die Anforderungen der jeweiligen Anlage anpassbar ist. Für Anlagen mit schweren Schienenfahrzeugen ist der Abstand zwischen zwei Haltevorrichtungen kleiner zu wählen als für Anlagen mit leichten Schienenfahrzeugen. Somit wird kein Material für überflüssige Haltevorrichtungen verschwendet und gleichzeitig ist die Sicherheit des Schienenfahrzeuges gewährleistet.

Weitere Vorteile ergeben sich aus den

Die Erfindung wird nun anhand von Abbildungen näher erläutert:
In der Figur 1 ist eine erfindungsgemäße Haltevorrichtung 1 zur Aufnahme von Leitern in Schrägansicht gezeichnet.
Figur 2 zeigt eine erfindungsgemäße Haltevorrichtung 1 zur Aufnahme von Leitern in Seitenansicht.
In der Figur 3 ist eine erfindungsgemäße Haltevorrichtung 1 mit ersten Schienenteilen gezeichnet.
Figur 4 zeigt eine erfindungsgemäße Haltevorrichtung 1 mit zweiten Schienenteilen.

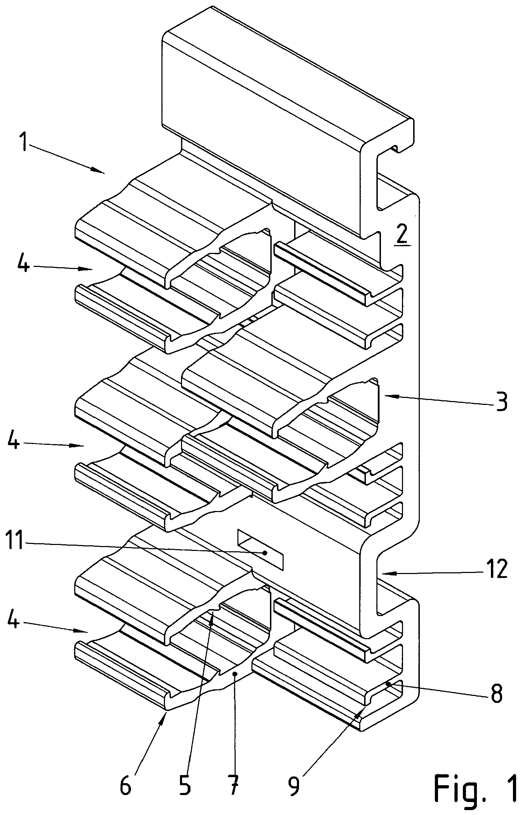

In Figur 1 ist eine erfindungsgemäße Haltevorrichtung 1 zur Aufnahme der Leiter gezeigt, wobei die Haltevorrichtung 1 ein Wandteil 2 aufweist.

Dabei weist die Haltevorrichtung 1 mindestens einen Aufnahmebereich 4 auf. Jeder Aufnahmebereich 4 weist einen Wandabschnitt 3 auf, wobei das Wandteil 2 der Haltevorrichtung 1 die Wandabschnitte 3 umfasst. Vorzugsweise ist das Wandteil 2 mit den Wandabschnitten 3 einstückig ausgeführt, insbesondere als Kunststoffspritzgussteil.

Der Aufnahmebereich 4 ist U-förmig ausgeformt und weist mindestens zwei Schenkelabschnitte 7 auf. Jeder Schenkelabschnitt 7 ist fest mit dem jeweils zugehörigen Wandabschnitt 3 des Aufnahmebereichs 4 verbunden. Die Schenkelabschnitte 7 sind elastisch auslenkbar ausgeführt. Vorzugsweise sind die Schenkelabschnitte 7 in sich elastisch verformbar und/oder gegen den Wandabschnitt elastisch verformbar.

Die Innenseite, also die zum Aufnahmebereich zugewandte Seite des jeweiligen Schenkelabschnitts 7, jedes Schenkelabschnitts 7 weist einen ersten Vorsprung 5 und einen zweiten Vorsprung 6 auf. Dabei ist der erste Vorsprung 5, insbesondere eine nach innen gerichtete Nase, zwischen dem zweiten Vorsprung 6 und dem Wandabschnitt 3 zwischengeordnet. Also ist der erste Vorsprung 5 in Einführrichtung von dem Wandabschnitt 3 und dem zweiten Vorsprung 6 beabstandet. Der zweite Vorsprung 6, insbesondere eine zum Aufnahmebereich 4 nach innen gerichtete Nase, ist am vom Wandabschnitt 3 abgewandten Endbereich des Schenkelabschnitts 7 angeordnet.

Der Abstand zwischen zwei Schenkelabschnitten 7 vergrößert sich entgegen der Einführrichtung mit zunehmendem Abstand von dem Wandabschnitt 3. Somit ist an der Innenseite der Schenkelabschnitte 7 zwischen Wandabschnitt 3 und dem ersten Vorsprung 5 eine erste Wölbung ausgeformt. Der weitere Profilverlauf der Innenseiten der Schenkelabschnitte 7 entgegen der Einführrichtung zeigt eine auf den ersten Vorsprung 5 folgende zweite Wölbung, welche in den Vorsprung 6 am Ende der Schenkelabschnitte 7 mündet.

Die zweite Wölbung ist dort angeordnet, wo auch die Wandstärke des Schenkelabschnitts 7 verengt ist. Somit ist eine verbesserte Elastizität bewirkbar.

Hierbei ist die Einführrichtung die Richtung, in welcher ein Schienenteil in die Haltevorrichtung 1 eingeführt wird. Die Einführrichtung steht insbesondere senkrecht zur Schienenrichtung und zur Querrichtung.

In Querrichtung, also der Richtung in welcher die Schenkelabschnitte 7 jedes Aufnahmebereichs 4 voneinander beabstandet sind, sind zwischen zwei Aufnahmebereichen 4 mindestens zwei Zungen 8 zwischengeordnet, welche fest mit dem Wandteil 2 verbunden und elastisch auslenkbar sind.

Insbesondere sind die Zungen 8 mit der Haltevorrichtung 1 einstückig ausgeführt. Vorzugsweise sind die Zungen 8 in gegen das Wandteil 2 elastisch auslenkbar und/oder in sich elastisch verformbar.

Jede Zunge 8 weist an ihrem dem Wandteil 2 gegenüberliegenden Ende eine Auskragung 9 auf. Dabei ist die Auskragung 9 auf der von der jeweils anderen Zunge 8 abgewandten Seite der Zunge 8 angeordnet.

Diese beiden Zungen 8 sind in Schienenrichtung jeweils vor oder hinter einem jeweiligen Aufnahmebereich 4 angeordnet. Somit ist ein in einen der Aufnahmebereiche 4 eingeführtes Schienenteil einerseits aufgenommen in diesem jeweiligen Aufnahmebereich 4 und andererseits auf die Auskragungen 9 der Zungen 8 aufgelegt und zum Wandteil 2 hin gedrückt, so dass diese Auskragungen 9 in Querrichtung voneinander ausgelenkt sind.

Insbesondere ist vorzugsweise die Länge der Aufnahmebereiche 4 in Schienenrichtung im Wesentlichen gleich der Länge der Zungen 8 in Schienenrichtung.

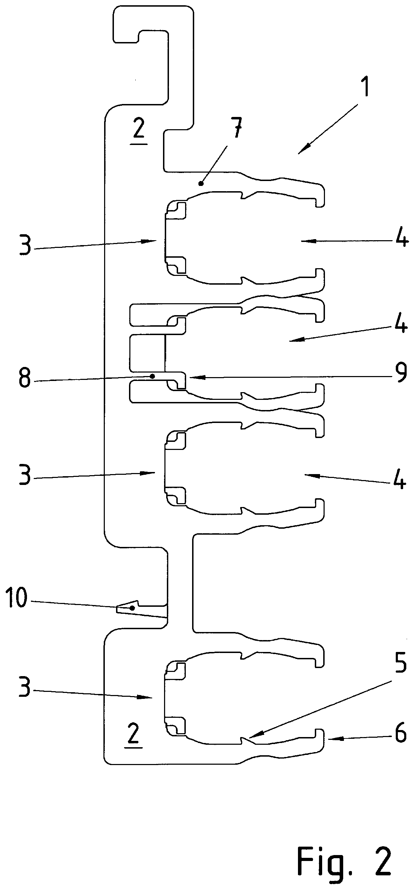

Die Schienenrichtung steht senkrecht zur Zeichnungsebene der Figuren 2 bis 4.

Somit ist eine in Schienenrichtung erste Reihe von Aufnahmebereichen 4 (A) und Zungen 8 (B) in Querrichtung gemäß dem Muster A B A angeordnet und eine zweite Reihe ist gemäß dem Muster B A B angeordnet. Also ist ein jeweiliger Aufnahmebereich 4 in Querrichtung gefolgt von einem Paar von Zungen 8. In Schienenrichtung ist jeweils vor beziehungsweise hinter einem jeweiligen Aufnahmebereich 4 ein Paar von Zungen 8 angeordnet.

Durch diese versetzte Anordnung ist ein voneinander unabhängiges Auslenken der jeweils nächstbenachbarten Schienenteile aufnehmenden Schenkelabschnitte 7 erreichbar.

Der Abstand zweier in Querrichtung nächstbenachbarten Aufnahmeberieche 4 ist kleiner als die Ausdehnung, insbesondere Weite, eines jeweiligen Aufnahmebereichs 4 in Querrichtung.

In Querrichtung zwischen zwei weiteren Aufnahmebereichen 4 ist eine C- oder U-förmige Auswölbung 12 in dem Wandteil 2 ausgeformt, wobei die Öffnung des C oder U zur von den Schienenteilen abgewandten Seite der Haltevorrichtung 1 hin gewandt ist. Diese Auswölbung 12 erstreckt sich über die gesamte Länge der Haltevorrichtung 1 in Schienenrichtung. Dabei sind neben den Aufnahmebereichen 4 in Schienenrichtung auf beiden Seiten der Auswölbung 12 die Zungen 8 angeordnet. Somit ist das aus Aufnahmebereichen 4 und Zungen 8 gebildete Muster im Bereich der Auswölbung 12 lückend.

Die Auswölbung 12 weist eine längliche, in Einführrichtung durch die Wandung der Haltevorrichtung 1 durchgehende Ausnehmung 11 auf sowie einen mit dieser Ausnehmung 11 verbundenen Haken 10, welcher sich in die Auswölbung 12 erstreckt. Dabei ist die lange Seite der Ausnehmung 11 parallel zur Schienenrichtung ausgerichtet. Mittels des elastisch auslenkbaren Hakens 10 ist die Haltevorrichtung 1 verbindbar mit einem nicht gezeigten Schienenträger, insbesondere in diesen Schienenträger einklipsbar.

Zum Lösen der Verbindung der Haltevorrichtung 1 mit dem nicht gezeigten Schienenträger, insbesondere einer Hutschiene, ist ein nicht gezeigtes Werkzeug, insbesondere ein Schraubendreher, durch die Ausnehmung 11 hindurchführbar. Mittels dieses Werkzeuges ist der Haken 11 auslenkbar, so dass der Haken 11 aus seiner Einrastposition im Schienenträger gelöst wird.

Die Haltevorrichtung 1 ist aus Kunststoff hergestellt, insbesondere mittels Spritzguss hergestellt. Sie ist einstückig ausgeführt.

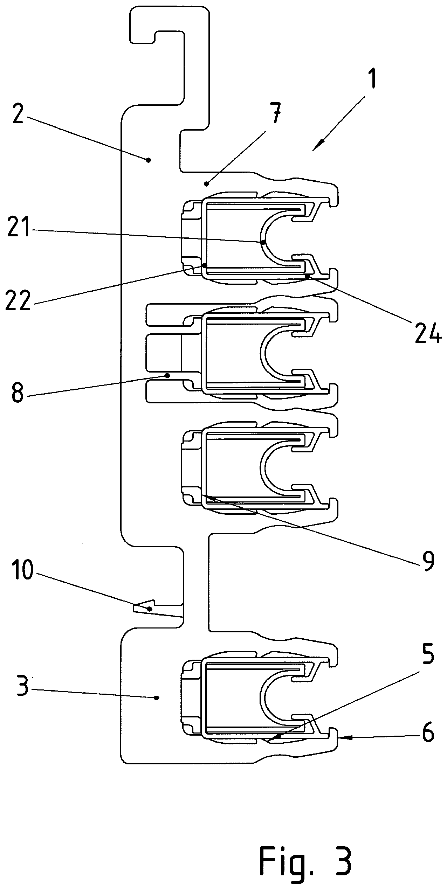

In Figur 3 ist ein erfindungsgemäßes Haltesystem mit der Haltevorrichtung 1 und mehreren gleichartigen ersten Schienenteilen gezeigt, welche in einen Aufnahmebereich 4 eingeklipst sind. Der Querschnitt eines jeweiligen ersten Schienenteils ist im Wesentlichen rechteckig.

Das Schienenteil ist jeweils gebildet aus einer Stromleitschiene 21 und einem Isolierprofilteil 22. Dabei ist die Stromleitschiene 21 in das Isolierprofilteil 22 eingeklipst, wobei das Isolierprofilteil 22 aus Kunststoff mittels Strangguss hergestellt ist, oder mit diesem als Verbundteil ausgeführt, wobei dann das Isolierprofilteil 22 um die Stromleitschiene 21 umspritzt ist.

Die Stromleitschiene 21 ist als Stranggussteil aus Metall hergestellt, insbesondere aus Kupfer oder Kupfer-haltigem Material hergestellt.

Ein in Schienenrichtung auf einem in den Figuren nicht gezeigten, parallel zu den Schienenteilen 21 verlegten Schienenträger, insbesondere Fahrschiene, bewegbares Schienenfahrzeug ist somit mit einem Schleifkontakt ausrüstbar, mittels dessen die Stromleitschiene 21 von der Einführrichtung her kommend kontaktierbar ist.

Das Isolierprofilteil 22 ist U-förmig ausgeformt und weist mindestens zwei Schenkelabschnitte 24 auf.

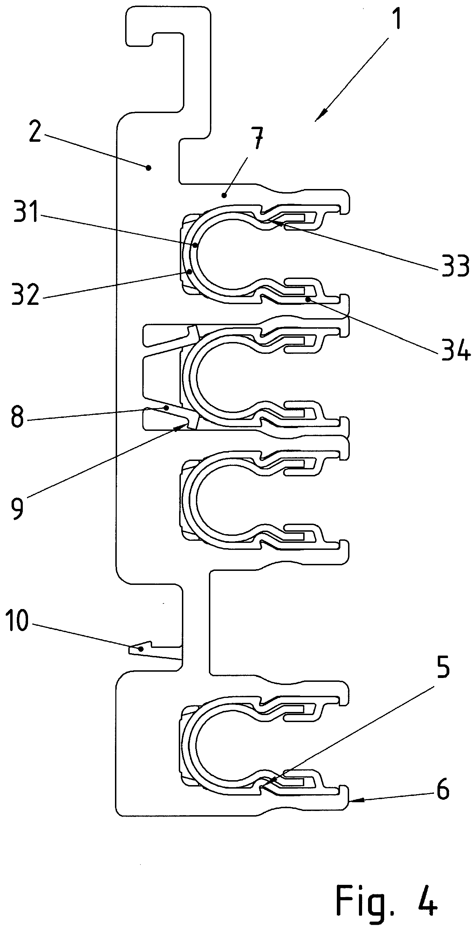

In Figur 4 ist das erfindungsgemäße Haltesystem mit der Haltevorrichtung 1 und mehreren gleichartigen zweiten Schienenteilen gezeigt, welche jeweils in einen Aufnahmebereich 4 eingeklipst sind. Der Querschnitt jedes zweiten Schienenteils ist im Wesentlichen halbkreisförmig.

Das Schienenteil ist gebildet aus einer Stromleitschiene 31 und einem Isolierprofilteil 32, wobei die Stromleitschiene 31 in das Isolierprofilteil 32 eingeklipst ist. Die Stromleitschiene 31 ist als Stranggussteil aus Metall hergestellt, insbesondere aus Kupfer oder Kupfer-haltigem Material, hergestellt. Sie ist wie die erste Stromleitschiene mittels eines Schleifkontaktes kontaktierbar.

Das Isolierprofilteil 32 ist aus Kunststoff mittels Strangguss hergestellt oder um die Stromleitschiene umspritzt. Das Isolierprofilteil 32 ist U-förmig ausgeformt und weist mindestens zwei Schenkelabschnitte 24 auf. Dabei ist an den Außenseiten der Schenkelabschnitte 34 mindestens eine Vertiefung 33, insbesondere sich in Schienenrichtung erstreckende Nut oder Kerbe, ausgeformt.

Somit sind in die Haltevorrichtung 1 sowohl Schienenteile mit im Wesentlichen rechteckigem Querschnitt einklipsbar als auch Schienenteile mit im Wesentlichen kreisförmigem oder halbkreisförmigem Querschnitt. Je nach Anlage ist also ein Typ von Schienenteilen wählbar oder sogar verschiedene Typen gleichzeitig einsetzbar.

Schienenteile mit im Wesentlichen rechteckigem Querschnitt werden in den Aufnahmebereich 4 eingeklipst und mittels der Vorsprünge 6 an den Enden der Schenkelabschnitte 7 in der Haltevorrichtung 1 fixiert. Dabei wird ein mittlerer Bereich der Schenkelabschnitte 7 elastisch ausgelenkt, so dass die Vorsprünge 5 nicht in die Schienenteile greifen. Die Zungen 8 werden nicht elastisch ausgelenkt, die Auskragungen 9 an den Zungen 4 fungieren als Auflagefläche für den Leiter.

Schienenteile mit im Wesentlichen halbkreisförmigem Querschnitt wie in Figur 4 dargestellt werden in den Aufnahmebereich 4 eingeklipst und mittels der Vorsprünge 5, welche in die Vertiefung 33 in den Schenkelabschnitten 34 des Schienenteils greifen, in der Haltevorrichtung 1 zumindest in Einführrichtung formschlüssig gehalten.

Während des Einklipsvorganges werden die Schenkelabschnitte 7 des Aufnahmebereichs 4 elastisch ausgelenkt, so dass das Schienenteil, welches in Querrichtung breiter ist als die Öffnungsweite des Aufnahmebereiches 4 in Querrichtung, trotzdem einführbar ist in den Aufnahmebereich 4 und zwischen den Schenkelabschnitten 7 mit den Vorsprüngen 5 und 6 hindurchführbar ist.

Die Zungen 8 werden zur Aufnahme des zweiten Schienenteils elastisch verformt. Dabei vergrößert sich der Abstand zwischen den freien Enden der beiden Zungen 8. Insbesondere werden die Zungen 8 genau so weit verformt, dass die Auskragungen 9 an den Enden der Zungen 8 seitlich an die Schenkelabschnitte 7 des Wandteils 2 anstoßen.

Es sind sogar in den Figuren nicht gezeigte Schienenteile mit im Wesentlichen kreisförmigem Querschnitt in den Aufnahmebereich 4 einklipsbar, indem die Vorsprünge 5 das dann runde Schienenteil zumindest teilweise umgreifen.

Bei weiteren erfindungsgemäßen Ausführungsbeispielen weist die Haltevorrichtung 1 einen Schlitzhohlleiter auf.

Bei weiteren erfindungsgemäßen Ausführungsbeispielen ist die Haltevorrichtung 1 mit einem Schienenträger mit einem Schlitzhohlleiter verbindbar, insbesondere in den Schienenträger einklipsbar.

Bei weiteren erfindungsgemäßen Ausführungsbeispielen ist die Haltevorrichtung 1 mit einem Schienenträger verbindbar, wobei auch ein Schlitzhohlleiter in den Schienenträger einklipsbar ist.

Bei weiteren erfindungsgemäßen Ausführungsbeispielen ist das Haltesystem mit einem Schienenträger einer Anlage für ein Schienenfahrzeug verbindbar. Dabei ist das Haltesystem mit dem Schienenträger formschlüssig verbindbar, insbesondere in den Schienenträger einklipsbar.

Der Schienenträger ist vorzugsweise als Doppel-T-Träger ausgeformt, wobei die Stirnseiten des Schienenträgers Abrollflächen zum Abrollen von Lenkrädern des Schienenfahrzeuges aufweisen und die Oberfläche des Schienenträgers Abrollflächen zum Abrollen von Transportrollen des Schienenfahrzeuges aufweist.

Das Schienenfahrzeug wird mittels eines Schleifkontaktes, welcher mit der Stromleitschiene des Haltesystems verbunden ist, elektrisch versorgt.

Die Anlage weist vorzugsweise mehrere Haltevorrichtungen auf, welche in Schienenrichtung beabstandet sind und die Schienenteile aufnehmen.

### Bezugszeichenliste

1 Haltevorrichtung
2 Wandteil
3 Wandabschnitt
4 Aufnahmebereich
5 erster Vorsprung
6 zweiter Vorsprung
7 Schenkelabschnitt
8 Zunge
9 Auskragung
10 Haken
11 Ausnehmung
12 Auswölbung
21 Stromleitschiene
22 Isolierprofilteil
24 Schenkelabschnitt
31 Stromleitschiene
32 Isolierprofilteil
33 Vertiefung
34 Schenkelabschnitt

## Patentansprüche

1. Haltesystem aufweisend zumindest ein erstes Schienenteil und ein zweites verschieden geformtes Schienenteil und zumindest eine **Haltevorrichtung (1) zur Aufnahme von Schienenteilen, wobei die Haltevorrichtung (1) zumindest einen Haltebereich mit zumindest zwei Schenkelabschnitten (7, 24, 34) und einem Wandabschnitt (3) aufweist,**
**wobei der jeweilige Aufnahmebereich U-förmig ausgeformt ist und durch die zwei Schenkelabschnitte (7, 24, 34) und den Wandabschnitt (3) definiert ist,**
**wobei jeder Schenkelabschnitt (7, 24, 34) mit dem Wandabschnitt (3) verbunden ist,**
**wobei die Schenkelabschnitte (7, 24, 34) elastisch auslenkbar ausgeführt sind,**
**wobei der jeweilige Schenkelabschnitt (7, 24, 34) an seiner Innenseite, also an der zum Aufnahmebereich zugewandten Seite, mindestens einen ersten Vorsprung (5) und einen zweiten Vorsprung (6) aufweist,**
**wobei der zweite Vorsprung (6) an einem Endbereich des Schenkelabschnitts (7, 24, 34) angeordnet ist,**
**und wobei der erste Vorsprung (5) zwischen dem zweiten Vorsprung (6) und dem Wandabschnitt (3) angeordnet ist,**
**insbesondere wobei der Endbereich auf dem vom Wandabschnitt (3) abgewandten Ende des Schenkelabschnitts (7, 24, 34) angeordnet ist,**
**wobei** wahlweise das erste oder das zweite Schienenteil im selben Haltebereich der Haltevorrichtung (1) formschlüssig verbindbar ist,
wobei das erste Schienenteil zumindest vom zweiten Vorsprung (6) formschlüssig gehalten wird, insbesondere wobei der zweite Vorsprung (6) eingeklipst ist am Endbereich des ersten Schienenteils,
wobei das zweite Schienenteil zumindest vom ersten Vorsprung (5) formschlüssig gehalten wird, insbesondere wobei der erste Vorsprung (5) eingeklipst ist in eine Nut des zweiten Schienenteils, insbesondere in eine in Schienenrichtung sich erstreckende Nut des zweiten Schienenteils.

2. Haltesystem nach Anspruch 1,
**dadurch gekennzeichnet, dass**
die Vorsprünge in Schienenrichtung weiter ausgedehnt sind als in einer Querrichtung hierzu,
insbesondere wobei der Abstand zwischen dem ersten Vorsprung (5) und dem Wandabschnitt (3) 30% bis 70% der Länge des Schenkelabschnitts (7, 24, 34) in Einführrichtung beträgt,
insbesondere wobei der Abstand zwischen dem ersten Vorsprung (5) und dem zweiten Vorsprung (6) 30% bis 70% der Länge des Schenkelabschnitts (7, 24, 34) in Einführrichtung beträgt.

3. Haltesystem nach Anspruch 1 oder 2,
**dadurch gekennzeichnet, dass**
der erste und/oder der zweite Vorsprung (5, 6) aus in Schienenrichtung jeweils voneinander beabstandeten Einzelvorsprüngen gebildet ist, deren Verbindungslinie, insbesondere im Wesentlichen, in Schienenrichtung liegt.

4. Haltesystem nach mindestens einem der vorangegangenen Ansprüche,
**dadurch gekennzeichnet, dass**
die Wandstärke des Schenkelabschnittes (7, 24, 34) zwischen den Vorsprüngen nicht konstant ist, insbesondere die Wandstärke eine Verengung auf**weist.**

5. **Haltesystem nach mindestens einem der vorangegangenen Ansprüche,**
**dadurch gekennzeichnet, dass**
in Schienenrichtung vor dem Schenkelabschnitt (7, 24, 34) eine Zunge (8) angeordnet ist, insbesondere eine von dem Schenkelabschnitt (7, 24, 34) in Schienenrichtung beabstandete Zunge (8),
insbesondere wobei die Zunge (8) in Schienenrichtung weiter ausgedehnt ausgeführt ist als in Querrichtung oder Einführrichtung,
insbesondere wobei die Zunge (8) mit einem Wandteil (2) verbunden ist, wobei das Wandteil (2) mit dem Wandabschnitt (3) verbunden ist und insbesondere einstückig ausgeformt ist,
insbesondere wobei die Zunge (8) mit dem Wandteil (2) einstückig ausgeformt ist,
insbesondere wobei das Wandteil (2) aus den Wandabschnitten (3) zusammengesetzt ist.

6. Haltesystem nach einem der vorangegangenen Ansprüche,
**dadurch gekennzeichnet, dass**
die Haltevorrichtung (1) zumindest zwei Zungen (8) aufweist,
insbesondere wobei am Endbereich jeder Zunge (8) eine Auskragung (9) ausgeformt ist,
insbesondere wobei die Auskragung (9) jeweils auf der der jeweils anderen Zunge (8) abgewandten Seite der Zunge (8) angeordnet ist.

7. Haltesystem nach einem der vorangegangenen Ansprüche,
**dadurch gekennzeichnet, dass**
die Zunge (8) elastisch auslenkbar ausgeführt ist,
und/oder dass
die Haltevorrichtung (1) einstückig ausgeführt ist,
insbesondere wobei die Haltevorrichtung (1) als Kunststoff-Spritzgussteil ausgeführt ist.

8. Haltesystem nach einem der vorangegangenen Ansprüche,
**dadurch gekennzeichnet, dass**
das zweite Schienenteil vom ersten Vorsprung (5) formschlüssig gehalten wird, insbesondere wobei der erste Vorsprung (5) eingeklipst ist in eine Nut des zweiten Schienenteils, insbesondere in eine in Schienenrichtung sich erstreckende Nut des zweiten Schienenteils,
und das zweite Schienenteil ebenfalls vom zweiten Vorsprung (6) formschlüssig gehalten wird, insbesondere wobei der zweite Vorsprung (6) eingeklipst ist am Endbereich des zweiten Schienenteils.

9. Haltesystem nach einem der vorangegangenen Ansprüche,
**dadurch gekennzeichnet, dass**
ein Schenkelabschnitt (7, 24, 34) des ersten Schienenteils im Wesentlichen ebene Außenflächen aufweist,
und wobei in einer Außenfläche eines Schenkelabschnittes (7, 24, 34) des zweiten Schienenteils eine Vertiefung (33) ausgeführt ist.

10. Haltesystem nach einem der vorangegangenen Ansprüche,
**dadurch gekennzeichnet, dass**
das zweite Schienenteil ein Isolierprofilteil (22, 32) und eine Stromleitschiene (21, 31) aufweist, insbesondere wobei die Stromleitschiene (21, 31) vom Isolierprofilteil (22, 32) zumindest teilweise umgeben ist,
insbesondere wobei die Vertiefung (33) sowohl im Isolierprofilteil (22, 32) als auch in der Stromleitschiene (21, 31) ausgeformt ist,
insbesondere wobei der Abstand zwischen der Vertiefung (33) und einem freien Ende des Schenkelabschnitts (7, 24, 34) zwischen 30% und 70% der Länge des Schenkelabschnitts (7, 24, 34) beträgt,
insbesondere wobei die Vertiefung (33) als Nut oder Kerbe ausgeführt ist.

11. Haltesystem nach einem der vorangegangenen Ansprüche,
**dadurch gekennzeichnet, dass**
der erste Vorsprung (5) der Haltevorrichtung (1) formschlüssig verbindbar ist mit der Vertiefung (33) im zweiten Schienenteil, insbesondere ist der Vorsprung (5) in die Vertiefung (33) einklipsbar,
und/oder dass
ein Endbereich des ersten und/oder zweiten Schienenteils formschlüssig verbindbar ist mit dem zweiten Vorsprung (6) an der Haltevorrichtung (1), insbesondere ist das Schienenteil in die Haltevorrichtung (1) einklipsbar,
und/oder dass
der Schenkelabschnitt (7, 24, 34) der Haltevorrichtung (1) mittels des ersten Schienenteils elastisch verformt ist, insbesondere ein den Vorsprung (5) aufweisenden mittlerer Abschnitt des Schenkelabschnitts (7, 24, 34) elastisch verformt ist,
und/oder dass
die Zunge (8) mittels des zweiten Schienenteils elastisch verformt ist, insbesondere ist die Zunge (8) so stark verformt, dass die Auskragung (9) das Wandteil (2) berührt.

12. Haltesystem nach einem der vorangegangenen Ansprüche,
**dadurch gekennzeichnet, dass**
die Stromleitschiene (21, 31) mittels eines Schleifkontaktes eines Schienenfahrzeuges kontaktierbar ist.

13. Anlage für ein Schienenfahrzeug, aufweisend einen Schienenträger und ein Haltesystem nach mindestens einem der Ansprüche 1 bis 12,
**dadurch gekennzeichnet, dass**
das Haltesystem mit dem Schienenträger formschlüssig verbindbar ist, insbesondere in den Schienenträger einklipsbar ist.

14. Anlage nach Anspruch 13,
**dadurch gekennzeichnet, dass**
das Schienenfahrzeug mittels eines Schleifkontaktes zu der Stromleitschiene (21, 31) elektrisch versorgbar ist,
und/oder dass
der Schienenträger Abrollflächen zum Abrollen der Räder des Schienenfahrzeugs aufweist und/oder dass
mindestens zwei Haltevorrichtungen (1) mit dem Schienenträger formschlüssig verbindbar sind,
insbesondere wobei die Haltevorrichtungen (1) in Schienenrichtung voneinander beabstandet sind.

## Claims

1. Retaining system having at least a first rail part and a second, differently formed, rail part and at least one retaining device (1) for receiving rail parts, wherein the retaining device (1) has at least one retaining region with at least two limb portions (7, 24, 34) and a wall portion (3),
wherein the respective receiving region is of U-shaped form and is defined by the two limb portions (7, 24, 34) and the wall portion (3),
wherein each limb portion (7, 24, 34) is connected to the wall portion (3),
wherein the limb portions (7, 24, 34) are of elastically deflectable design,
wherein the respective limb portion (7, 24, 34) has at its inner side, i.e. at the side facing the receiving region, at least a first projection (5) and a second projection (6),
wherein the second projection (6) is arranged at an end region of the limb portion (7, 24, 34),
and wherein the first projection (5) is arranged between the second projection (6) and the wall portion (3),
in particular wherein the end region is arranged on the end of the limb portion (7, 24, 34) facing away from the wall portion (3),
wherein selectively the first or the second rail part is form-lockingly connectable in the same retaining region of the retaining device (1),
wherein the first rail part is form-lockingly retained at least by the second projection (6), in particular wherein the second projection (6) is clipped in at the end region of the first rail part,
wherein the second rail part is form-lockingly retained at least by the first projection (5), in particular wherein the first projection (5) is clipped into a groove of the second rail part, in particular into a groove, extending in the rail direction, of the second rail part.

2. Retaining system according to Claim 1,
**characterised in that**
the projections are further extended in the rail direction than in a transverse direction thereto,
in particular wherein the distance between the first projection (5) and the wall portion (3) is 30% to 70% of the length of the limb portion (7, 24, 34) in the insertion direction,
in particular wherein the distance between the first projection (5) and the second projection (6) is 30% to 70% of the length of the limb portions (7, 24, 34) in the insertion direction.

3. Retaining system according to Claim 1 or 2,
**characterised in that**
the first and/or the second projection (5, 6) is formed from individual projections spaced respectively from one another in the rail direction, the connecting line of which projections lies, in particular substantially, in the rail direction.

4. Retaining system according to at least one of the preceding claims,
**characterised in that**
the wall thickness of the limb portion (7, 24, 34) is not constant between the projections, in particular the wall thickness has a narrowing.

5. Retaining system according to at least one of the preceding claims,
**characterised in that**
there is arranged in the rail direction in front of the limb portion (7, 24, 34) a tongue (8), in particular a tongue (8) spaced from the limb portion (7, 24, 34) in the rail direction,
in particular wherein the tongue (8) is designed further extended in the rail direction than in the transverse direction or insertion direction,
in particular wherein the tongue (8) is connected to a wall part (2), wherein the wall part (2) is connected to the wall portion (3) and in particular is formed in one piece,
in particular wherein the tongue (8) is formed in one piece with the wall part (2),
in particular wherein the wall part (2) is composed of the wall portions (3).

6. Retaining system according to one of the preceding claims,
**characterised in that**
the retaining device (1) has at least two tongues (8),
in particular wherein a protrusion (9) is formed at the end region of each tongue (8),
in particular wherein the protrusion (9) is arranged in each case on the side of the tongue (8) facing away from the respectively other tongue (8).

7. Retaining system according to one of the preceding claims,
**characterised in that**
the tongue (8) is of elastically deflectable design,
and/or **in that**
the retaining device (1) is designed in one piece,
in particular wherein the retaining device (1) is designed as a plastic injection-moulded part.

8. Retaining system according to one of the preceding claims,
**characterised in that**
the second rail part is form-lockingly retained by the first projection (5), in particular wherein the first projection (5) is clipped into a groove of the second rail part, in particular into a groove, extending in the rail direction, of the second rail part,
and the second rail part is likewise form-lockingly retained by the second projection (6), in particular wherein the second projection (6) is clipped in at the end region of the second rail part.

9. Retaining system according to one of the preceding claims,
**characterised in that**
a limb portion (7, 24, 34) of the first rail part has substantially plane outer surfaces,
and wherein an indentation (33) is formed in an outer surface of a limb portion (7, 24, 34) of the second rail part.

10. Retaining system according to one of the preceding claims,
**characterised in that**
the second rail part has an insulating profile part (22, 32) and a current-conducting rail (21, 31), in particular wherein the current-conducting rail (21, 31) is at least partly surrounded by the insulating profile part (22, 32),
in particular wherein the indentation (33) is formed both in the insulating profile part (22, 32) and in the current-conducting rail (21, 31),
in particular wherein the distance between the indentation (33) and a free end of the limb portion (7, 24, 34) is between 30% and 70% of the length of the limb portion (7, 24, 34),
in particular wherein the indentation (33) is designed as a groove or notch.

11. Retaining system according to one of the preceding claims,
**characterised in that**
the first projection (5) of the holding device (1) is form-lockingly connectable to the indentation (33) in the second rail part, in particular the projection (5) is clippable into the indentation (33),
and/or **in that**
an end region of the first and/or second rail part is form-lockingly connectable to the second projection (6) on the retaining device (1), in particular the rail part is clippable into the retaining device (1),
and/or **in that**
the limb portion (7, 24, 34) of the retaining device (1) is elastically deformed by means of the first rail part, in particular a middle portion, having the projection (5), of the limb portion (7, 24, 34) is elastically deformed,
and/or **in that**
the tongue (8) is elastically deformed by means of the second rail part, in particular the tongue (8) is so highly deformed that the protrusion (9) touches the wall part (2).

12. Retaining system according to one of the preceding claims,
**characterised in that**
the current-conducting rail (21, 31) is contactable by means of a sliding contact of a rail vehicle.

13. Installation for a rail vehicle, having a rail carrier and a retaining system according to at least one of Claims 1 to 12,
**characterised in that**
the retaining system is form-lockingly connectable to the rail carrier, in particular is clippable into the rail carrier.

14. Installation according to Claim 13,
**characterised in that**
the rail vehicle is electrically suppliable by means of a sliding contact with the current-conducting rail (21, 31),
and/or **in that**
the rail carrier has rolling surfaces for the rolling of the wheels of the rail vehicle
and/or **in that**
at least two retaining devices (1) are form-lockingly connectable to the rail carrier,
in particular wherein the retaining devices (1) are spaced from one another in the rail direction.

## Revendications

1. Système de maintien, présentant au moins un premier élément de rail et un deuxième élément de rail de forme différente, et au moins un dispositif de maintien (1) destiné à recevoir des éléments de rails, sachant que le dispositif de maintien (1) présente au moins une région de maintien avec au moins deux parties formant branches (7, 24, 34) et une partie formant paroi (3),
sachant que la région de réception respective est réalisée en forme de U et est définie par les deux parties formant branches (7, 24, 34) et la partie formant paroi (3),
sachant que chaque partie formant branche (7, 24, 34) est reliée à la partie formant paroi (3),
sachant que les parties formant branches (7, 24, 34) sont réalisées élastiquement déviables,
sachant que la partie formant branche respective (7, 24, 34) présente sur son côté intérieur, donc sur le côté tourné vers la région de réception, au moins une première saillie (5) et une deuxième saillie (6),
sachant que la deuxième saillie (6) est disposée sur une région terminale de la partie formant branche (7, 24, 34),
et sachant que la première saillie (5) est disposée entre la deuxième saillie (6) et la partie formant paroi (3),
sachant en particulier que la région terminale est disposée à l'extrémité de la partie formant branche (7, 24, 34) qui est éloignée de la partie formant paroi (3),
sachant que, au choix, le premier ou le deuxième élément de rail peut être assemblé par complémentarité de forme dans la même région de maintien du dispositif de maintien (1),
sachant que le premier élément de rail est maintenu par complémentarité de forme au moins par la deuxième saillie (6), sachant en particulier que la deuxième saillie (6) est clipsée sur la région terminale du premier élément de rail,
sachant que le deuxième élément de rail est maintenu par complémentarité de forme au moins par la première saillie (5), sachant en particulier que la première saillie (5) est clipsée dans une rainure du deuxième élément de rail, en particulier dans une rainure du deuxième élément de rail qui s'étend dans la direction du rail.

2. Système de maintien selon la revendication 1, **caractérisé en ce que** les saillies sont plus étendues dans la direction du rail que dans une direction transversale à celle-ci,
sachant en particulier que la distance entre la première saillie (5) et la partie formant paroi (3) est égale à 30% à 70% de la longueur de la partie formant branche (7, 24, 34) dans la direction d'introduction,
sachant en particulier que la distance entre la première saillie (5) et la deuxième saillie (6) est égale à 30% à 70% de la longueur de la partie formant branche (7, 24, 34) dans la direction d'introduction.

3. Système de maintien selon la revendication 1 ou 2, **caractérisé en ce que** la première et/ou la deuxième saillie (5, 6) est formée de saillies individuelles respectivement distantes les unes des autres dans la direction du rail et dont la ligne de jonction se situe, en particulier pour l'essentiel, dans la direction du rail.

4. Système de maintien selon au moins une des revendications précédentes, **caractérisé en ce que** l'épaisseur de paroi de la partie formant branche (7, 24, 34) entre les saillies n'est pas constante, en particulier l'épaisseur de paroi présente un rétrécissement.

5. Système de maintien selon au moins une des revendications précédentes, **caractérisé en ce qu'**une languette (8) est disposée avant la partie formant branche (7, 24, 34) dans la direction du rail, en particulier une languette (8) distante de la partie formant branche (7, 24, 34) dans la direction du rail,
sachant en particulier que la languette (8) est réalisée plus étendue dans la direction du rail qu'en direction transversale ou direction d'introduction,
sachant en particulier que la languette (8) est reliée à un élément formant paroi (2), sachant que l'élément formant paroi (2) est relié à la partie formant paroi (3) et est notamment formé d'un seul tenant avec celle-ci,
sachant en particulier que la languette (8) est formée d'un seul tenant avec l'élément formant paroi (2),
sachant en particulier que l'élément formant paroi (2) est composé des parties formant paroi (3).

6. Système de maintien selon une des revendications précédentes,
**caractérisé en ce que** le dispositif de maintien (1) présente au moins deux languettes (8), sachant en particulier qu'un porte-à-faux (9) est formé sur la région terminale de chaque languette (8),
sachant en particulier que le porte-à-faux (9) est chaque fois disposé sur le côté de la languette (8) qui est opposé à l'autre languette respective (8).

7. Système de maintien selon une des revendications précédentes, **caractérisé en ce que** la languette (8) est réalisée élastiquement déviable,
et/ou **en ce que** le dispositif de maintien (1) est réalisé d'un seul tenant,
sachant en particulier que le dispositif de maintien (1) est réalisé sous la forme d'une pièce moulée par injection de matière plastique.

8. Système de maintien selon une des revendications précédentes,
**caractérisé en ce que** le deuxième élément de rail est maintenu par complémentarité de forme par la première saillie (5), sachant en particulier que la première saillie (5) est clipsée dans une rainure du deuxième élément de rail, en particulier dans une rainure du deuxième élément de rail qui s'étend dans la direction du rail,
et que le deuxième élément de rail est également maintenu par complémentarité de forme par la deuxième saillie (6), sachant en particulier que la deuxième saillie (6) est clipsée sur la région terminale du deuxième élément de rail.

9. Système de maintien selon une des revendications précédentes,
**caractérisé en ce qu'**une partie formant branche (7, 24, 34) du premier élément de rail présente des faces extérieures sensiblement planes,
et sachant qu'un renfoncement (33) est réalisé dans une face extérieure d'une partie formant branche (7, 24, 34) du deuxième élément de rail.

10. Système de maintien selon une des revendications précédentes,
**caractérisé en ce que** le deuxième élément de rail présente un élément profilé isolant (22, 32) et un rail conducteur de courant (21, 31), sachant en particulier que le rail conducteur de courant (21, 31) est au moins partiellement entouré par l'élément profilé isolant (22, 32),
sachant en particulier que le renfoncement (33) est formé à la fois dans l'élément profilé isolant (22, 32) et dans le rail conducteur de courant (21, 31),
sachant en particulier que la distance entre le renfoncement (33) et une extrémité libre de la partie formant branche (7, 24, 34) est comprise entre 30% et 70% de la longueur de la partie formant branche (7, 24, 34),
sachant en particulier que le renfoncement (33) est réalisé sous forme de rainure ou d'entaille.

11. Système de maintien selon une des revendications précédentes,
**caractérisé en ce que** la première saillie (5) du dispositif de maintien (1) peut être assemblée par complémentarité de forme au renfoncement (33) dans le deuxième élément de rail, en particulier la saillie (5) peut être clipsée dans le renfoncement (33), et/ou **en ce qu'**une région terminale du premier et/ou du deuxième élément de rail peut être assemblée par complémentarité de forme à la deuxième saillie (6) sur le dispositif de maintien (1), en particulier l'élément de rail peut être clipsé dans le dispositif de maintien (1),
et/ou **en ce que** la partie formant branche (7, 24, 34) du dispositif de maintien (1) est élastiquement déformée au moyen du premier élément de rail, en particulier une partie médiane, présentant la saillie (5), de la partie formant branche (7, 24, 34) est élastiquement déformée,
et/ou **en ce que** la languette (8) est élastiquement déformée au moyen du deuxième élément de rail, en particulier la languette (8) est déformée dans une mesure telle que le porte-à-faux (9) touche l'élément formant paroi (2).

12. Système de maintien selon une des revendications précédentes,
**caractérisé en ce que** le rail conducteur de courant (21, 31) peut être mis en contact au moyen d'un contact frotteur d'un véhicule sur rails.

13. Installation pour un véhicule sur rails, présentant un support de rails et un système de maintien selon au moins une des revendications 1 à 12,
**caractérisée en ce que** le système de maintien peut être assemblé par complémentarité de forme au support de rails, en particulier peut être clipsé dans le support de rails.

14. Installation selon la revendication 13, **caractérisée en ce que** le véhicule sur rails peut être alimenté électriquement au moyen d'un contact frotteur menant au rail conducteur de courant (21, 31),
et/ou **en ce que** le support de rails présente des surfaces de roulement pour le roulement de roues du véhicule sur rails,
et/ou **en ce qu'**au moins deux dispositifs de maintien (1) peuvent être assemblés par complémentarité de forme au support de rails,
sachant en particulier que les dispositifs de maintien (1) sont mutuellement distants dans la direction du rail.
